(19) Europäisches Patentamt
European Patent Office
Office européen des brevets

(11) Publication number: **0 065 735**
**B1**

(12) **EUROPEAN PATENT SPECIFICATION**

(45) Date of publication of patent specification: **24.09.86**

(51) Int. Cl.$^4$: **C 08 K 5/00,** C 08 L 63/10 // (C08K5/00, 5:09, 5:46)

(21) Application number: **82104306.4**

(22) Date of filing: **17.05.82**

(54) **Thermosettable resins stabilized with oxalic acid and phenothiazine.**

(30) Priority: **20.05.81 US 265473**

(43) Date of publication of application:
**01.12.82 Bulletin 82/48**

(45) Publication of the grant of the patent:
**24.09.86 Bulletin 86/39**

(84) Designated Contracting States:
**AT BE CH DE FR GB IT LI NL SE**

(56) References cited:
**US-A-3 683 045**

(73) Proprietor: **THE DOW CHEMICAL COMPANY**
**2030 Dow Center Abbott Road P.O. Box 1967**
**Midland, MI 48640 (US)**

(72) Inventor: **Messick, Virginia Brooks**
**55 Chervil Common, P. O. Box 339**
**Lake Jackson Texas 77566 (US)**

(74) Representative: **Hann, Michael, Dr. et al**
**Patentanwälte Dr. Michael Hann Dr. H.-G. Sternagel Sander Aue 30**
**D-5060 Bergisch Gladbach 2 (DE)**

**EP 0 065 735 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Thermosettable resins generally have limited shelf lives, i.e., upon storage at ambient temperatures the resins undergo premature gelation which, of course is undesirable. Generally, the tendency of a resin to gel increases as the storage temperature increases and is also dependent on the choice of reactants and on the kind and amount of monomer which is generally mixed with the resin.

Thermosettable vinyl ester resins, unsaturated polyesters or mixtures thereof have similar shelf life or storage stability problems. In the past attempts with known stabilizing materials to prevent gelation have also resulted in an undesirable increase in the catalyzed gel times of the resins and adversely affected the curability of the resin. Typical of inhibitors taught by the art are certain hydroxyamines as proposed in U.S. Patent No. 3,408,422 and phenothiazine taught in U.S. Patent No. 3,683,045.

This invention is directed to a thermosettable resin composition having improved storage stability comprising a vinyl ester resin containing the characteristic linkage

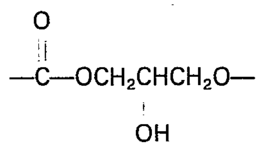

and terminal, polymerizable vinylidene groups, a vinyl monomer as a reactive diluent, and a stabilizing amount of a phenothiazine containing gelation inhibitor which is characterized in that the gelation inhibitor is a mixture of oxalic acid and phenothiazine. The combination of oxalic acid and phenothiazine exhibits a synergistic effect, increasing the storage life of thermosettable vinyl ester resins without adversely affecting their curability. Additional benefits result from the use of a combination of oxalic acid, phenothiazine and 4-chloro-2-nitrophenol.

Vinyl ester resins are described in U.S. Patent No. 3,367,992 wherein dicarboxylic acid half esters of hydroxyalkyl acrylates or methacrylates are reacted with polyepoxide resins. Bowen in U.S. Patent Nos. 3,066,112 and 3,179,623 describes the preparation of vinyl ester resins from monocarboxylic acids such as acrylic and methacrylic acid. Bowen also describes alternate methods of preparation wherein a glycidyl methacrylate or acrylate is reacted with the sodium salt of a dihydric phenol such as bisphenol A. Vinyl ester resins based on epoxy novolac resins are described in U.S. Patent No. 3,301,743 to Fekete et al. Fekete et al. also describe in U.S. Patent No. 3,256,226 vinyl ester resins wherein the molecular weight of the polyepoxide is increased by reacting a dicarboxylic acid with the polyepoxide resin as well as acrylic acid, etc. Other difunctional compounds containing a group which is reactive with an epoxide group, such as an amine, mercaptan, and the like, may be utilized in place of the dicarboxylic acid.

Briefly, any of the known polyepoxides may be employed in the preparation of the vinyl ester resins of this invention. Useful polyepoxides are glycidyl polyethers of both polyhydric alcohols and polyhydric phenols, epoxy novolacs, epoxidized fatty acids or drying oil acids, epoxidized diolefins, epoxidized diunsaturated acid esters as well as epoxides of unsaturated polyesters, as long as they contain more than one oxirane group per molecule.

Preferred polyepoxides are glycidyl polyethers of polyhydric alcohols or polyhydric phenols having weights per epoxide group of about 150 to 2000. These polyepoxides are usually made by reacting at least about two moles of an epihalohydrin or glycerol dihalohydrin with one mole of the polyhydric alcohol or polyhydric phenol, and a sufficient amount of a caustic alkali to combine with the halogen of the halohydrin. The products are characterized by the presence of more than one epoxide group per molecule, i.e., a 1,2-epoxy equivalency greater than one.

Unsaturated monocarboxylic acids include acrylic acid, methacrylic acid, halogenated acrylic or methacrylic acid, cinnamic acid and the like and mixtures thereof. Also included within the term "unsaturated carboxylic acids" are the hydroxyalkyl acrylate or methacrylate half esters of dicarboxylic acids as described in U.S. Patent No. 3,367,992 wherein the hydroxyalkyl group preferably has from 2 to about 6 carbon atoms.

Polymerization inhibitors, commonly called process inhibitors such as t-butyl catechol, monomethyl ether of hydroquinone (MEHQ) or hydroquinone, are advantageously added to prevent premature polymerization during the preparation of the vinyl ester resin.

Suitable monomers include vinyl aromatic compounds such as, for example, styrene, vinyl toluene, and divinyl benzene. Other useful monomers include the esters of saturated alcohols such as, for example, methyl, ethyl, isopropyl, and octyl, with acrylic acid or methacrylic acid; vinyl acetate, diallyl maleate, dimethallyl fumarate; mixtures of the same and all other monomers which are capable of copolymerizing with the vinyl ester resin.

Oxalic acid is sold commercially as the dihydrate and the acid or its dihydrate are equally effective as the stabilizer. Oxalic acid or dihydrate is usually effective at a concentration of from 50 to 1000 parts per million (ppm), based upon the total weight of the vinyl ester resin and vinyl monomer. Higher amounts than 1000 ppm can be used and will improve the stability but may extend the gel time. Preferably, the amount to be used is from 50 to 400 ppm.

Phenothiazine is usually effective at a concentration of from 10 to 500 ppm, preferably from 50 to 400 ppm. The synergistic effect observed when using a mixture of oxalic acid and phenothiazine is apparent with all ratios of the two ingredients that contain a significant amount of each. When 4-chloro-2-nitrophenol is included in the gelation inhibitor mixture, it is used at a concentration of from 10 to 500 ppm, preferably from 50 to 400 ppm.

The stabilizing agent is usually added to the prepared resin either before or after admixture with the vinyl monomer. The combination of oxalic acid and phenothiazine can extend the shelf life of the resins 1.5 times or more. Also, it is less air dependent and is effective as a stabilizer under both aerobic and anaerobic conditions.

Catalysts that may be used for the curing or polymerization are preferably the peroxide and hydroperoxide catalysts such as, for example, benzoyl peroxide, lauroyl peroxide, cumen hydroperoxide, t-butyl hydroperoxide, methyl ethyl ketone peroxide (MEKP), and t-butyl perbenzoate. The amount of the catalyst added will vary preferably from 0.1 percent to about 5 percent by weight of the resin phase.

Preferably, the cure of the resin can be initiated at room temperature by the addition of known accelerating agents or promoters, such as, for example, lead, potassium or cobalt naphthenate, N,N-dimethyl aniline, and N,N-dimethyl-p-toluidine usually in concentrations ranging from 0.1 to 5.0 weight percent. The promoted/catalyzed composition of resin/monomer, when uninhibited, will usually be converted to at least a gel state in a few minutes and cured to a solid state in 30 minutes to one or two hours. That time may vary widely depending upon the particular resin and vinyl monomer used, the catalyst/promoter system employed and its concentration, the temperature and other known factors. Similar results are observed when the usual process inhibitors are present that were added during the preparation of the resin. In amounts necessary to achieve that objective, such process inhibitors do not improve the storage stability of the composition to a significant extent. When used in amounts sufficient to provide storage stability, the gelation and cure rates are increased to unacceptable levels. It is an advantage of this invention that the process inhibitor can be employed in that minimum amount needed during resin preparation and that the stabilizing inhibitor systems of this invention can be employed to provide the desired storage stability without unacceptable effects on gelation and cure.

The benefits and advantages of the invention and the best mode for carrying out the same are illustrated in the following examples. All parts and percents are by weight unless otherwise specified.

Examples 1 through 10 and Comparative Runs A through D

For the following examples and comparative runs, Resins A and B were utilized. Resin A was prepared by catalytically reacting bisphenol A with a diglycidyl ether of bisphenol A having an epoxy equivalent weight (EEW) between 172 and 176 at 150°C under a nitrogen atmosphere for 1 hour to form a polyepoxide having an EEW of 535. After cooling to 110°C, additional diglycidyl ether of bisphenol A was added with methacrylic acid and hydroquinone and reacted to a carboxyl content between 2 and 2.5 percent. Maleic anhydride was then added to the vinyl ester resin and reacted therewith. The final resin was diluted with styrene containing 50 ppm of t-butyl catechol. The components of the final resin composition are:

| | |
|---|---|
| Bisphenol A | 7.7% |
| Diglycidyl ether of bisphenol A, EEW 172—176 | 25.1% |
| Methacrylic acid | 9.15% |
| Diglycidyl ether of bisphenol A, EEW 172—176 | 11.6% |
| Maleic anhydride | 1.45% |
| Styrene | 45.0% |

Resin B was prepared by reacting 1 equivalent of methacrylic acid with 0.75 equivalent of an epoxy novolac having an EEW between 175 and 182 and 0.25 equivalents of a diglycidyl ether of bisphenol A having an EEW between 186 and 192. These reactants were heated to 115°C with catalyst and hydroquinone present until the carboxylic acid content reached 1 percent. The reaction mixture was cooled and styrene containing 50 ppm of t-butyl catechol was added. The components of the final resin composition are:

| | |
|---|---|
| Methacrylic acid | 20.6% |
| Epoxy novolac, EEW 175—182 | 32.1% |
| Diglycidyl ether of bisphenol A, EEW 186—192 | 11.3% |
| Styrene | 36.0% |

Examples 1 through 10 and Comparative Runs A through D were prepared by mixing one or more inhibitor compounds with Resin A or Resin B. The inhibitor compounds are designated as follows:

| Inhibitor compound | Designation |
|---|---|
| Phenothiazine | C |
| Monomethyl ether of hydroquinone | D |
| Oxalic acid dihydrate | E |
| Oxalic acid anhydrous | F |
| 4-chloro-2-nitrophenol | G |

Examples 1 through 10 and Comparative Runs A through D were evaluated according to the following stability tests and gel tests. For each stability test, a two-ounce (59 ml) narrow mouth, round, amber bottle was filled to 70 percent or 94 percent of the maximum liquid volume with a resin composition containing one or more inhibitor compounds. The head space above the liquid was either air or nitrogen gas. The bottle was capped with a 20 mm plastic tin-lined cap. The bottle was then placed into an air circulated oven maintained at 55°C or 110°F (43.3°C). For the tests run at 110°F (43.3°C), the bottles were only filled to 94 percent of the maximum liquid volume. The stability of each composition was checked daily by inverting each bottle. A composition was considered gelled and was removed from the oven when a layer of solid resin remained at the bottom of the bottle or when the composition appeared stringy in consistency.

Three gel tests were conducted. In the first test (I), a 1.0 gram of benzoyl peroxide was mixed with 1.0 gram of styrene in a 4 ounce (108.2 ml) wide-mouth bottle. One hundred grams of a resin composition was added and the mixture mixed on a shaker for 45 minutes. The copolymerized resin composition was poured into a test tube to a level of 3 inches (76 mm). The test tube was corked and allowed to stand from 5 to 10 minutes to be rid of the air bubbles. A thermocouple was placed into the center of the test tube one inch (25.4 mm) below the surface of the resin composition. The test tube containing the resin composition and the thermocouple was placed into a constant temperature bath maintained at 180°F (82.2°C). Two timers were started when the temperature of the resin composition reached 150°F (65.6°C). One timer was stopped when the temperature of the resin composition had risen 10°F (5.6°C) above the temperature of the constant temperature bath. That time was taken as the gel time. The test was continued until the recording pyrometer had run two minutes past the maximum temperature. The second timer was stopped when the pyrometer indicated the resin had reached the maximum temperature. The maximum temperature was called the peak temperature. The time required for the temperature of the resin composition to increase from 150°F (65.6°C) to the peak temperature was called the peak time.

In the second gel test (II), 100 grams of Resin A or B was placed into a 4-ounce (108.2 ml), wide-mouth glass jar. The jar containing the resin was placed into a 77°F (25°C) constant temperature bath for 45 minutes. To the resin was added 0.5 ml of 6 percent solution of cobalt naphthenate in petroleum spirits, which was then mixed in thorougly. Then 1.5 ml of a 60 percent solution of methyl ethyl ketone peroxide (MEKP) in dimethyl phthalate was added to the composition and mixed in thoroughly. The jar containing the catalyzed resin composition was placed on a gelometer stand and a tube was extended into the resin. The gelometer was started and time required for the resin to gel was recorded. This was called the gel time. The jar containing the catalyzed resin composition was removed from the gelometer and a thermocouple was placed about 3/4 inch (19 mm) from the bottom of the jar. The time and temperature at which the resin composition breaks away from the side of the jar was noted. The temperature was the peak temperature. The total elapsed time from the addition of the MEKP until the peak temperature was reached was called the peak time.

In the third gel test (III), the procedure of test II was followed using 0.2 ml of 6 percent cobalt naphthenate and 0.75 ml of 60 percent MEKP.

Indentation hardness measured by means of a Barcol Impressor according to ASTM D 2583 was determined for the cured products of Examples 3 and 5, and Comparative Runs A and C. Before making the hardness measurements, the samples were cured at room temperature for 24 hours. The catalyst system was 0.3 ml of a 6 percent solution of cobalt naphthenate and 1.5 ml of a 60 percent solution of MEKP per 100 grams of Resin A or Resin B.

The compositions and test results for Examples 1 through 4 and Comparative Runs A and B are shown in Table I. The compositions and test results for Examples 5 through 10 and Comparative Runs C and D are shown in Table II.

By procedures identical to Examples 1 through 2 and Comparative Run A, compositions of Resin A containing various inorganic and organic acids were evaluated. The acids employed were hydrochloric, ortho-phosphoric, acetic and trichloroacetic. All of those compositions failed to provide the advantageous benefits of oxalic acid.

By procedures identical to Examples 3 through 10 and Comparative Runs B through D, compositions of Resin B containing various inorganic and organic acids were evaluated. The acids employed were hydrochloric, nitric, sulfuric, maleic and acetic. None of these showed the benefit of oxalic acid with Resin

B. When ortho-phosphoric acid was employed, the storage stability was increased but gel times were extended beyond practical working limits.

TABLE I

| Examples or Comparative Runs | A | 1 | 2 | 3 | 4 | B |
|---|---|---|---|---|---|---|
| Resin | A | A | A | B | B | B |
| Inhibitor, ppm | | | | | | |
| C | 150 | 150 | 150 | 256 | 256 | 256 |
| D | 250 | — | — | — | — | — |
| E | — | 200 | 200 | 200 | 200 | — |
| G | — | — | 100 | — | 100 | — |
| Stability tests, days (Temp., Liq. vol., Atm.) | | | | | | |
| 55°C, 70%, air | 9 | 11 | 14 | 10 | 10 | 5 |
| 55°C, 70%, $N_2$ | 5 | 13 | | 8 | 10 | 3 |
| 55°C, 94%, air | 4 | 8 | 10 | 6 | 6 | 3 |
| 55°C, 94%, $N_2$ | 4 | 8 | 10 | 5 | 5 | 3 |
| 43.3°C, 94%, air | 14 | 25 | 26 | — | 17 | 9 |
| 43.3°C, 94%, $N_2$ | 12 | — | 26 | — | 17 | 10 |
| Gel tests | | | | | | |
| 82.2°C, Gel time, min. | 12.8 | 9.1 | — | 12.5 | — | — |
| Peak time, min. | 15.6 | 12.0 | — | 14.2 | — | — |
| Peak temp., °C | 188.9 | 198 | — | 203.9 | — | — |
| 25°C (I) Gel time, min. | 19 | 14.9 | — | 11.4 | — | — |
| Peak time, min. | 35 | 26.5 | — | 16.7 | — | — |
| Peak temp., °C | 167.2 | 171 | — | 202 | — | — |
| 25°C (II) Gel time, min. | 75 | — | — | 91.7 | — | — |
| Peak time, min. | 141 | — | — | 105.2 | — | — |
| Peak temp., °C | 128.3 | — | — | 185.6 | — | — |
| Barcol hardness | 3 | — | 23 | — | 20 | 18 |

TABLE II

| Examples or Comparative Runs | 5 | C | 6 | D | 7 | 8 | 9 | 10 |
|---|---|---|---|---|---|---|---|---|
| Resin | B | B | B | B | B | B | B | B |
| Inhibitor, ppm | | | | | | | | |
| C | 256 | — | 256 | — | 256 | 256 | 256 | 256 |
| E | 50 | 100 | 100 | 200 | 200 | | 300 | 400 |
| F | — | — | — | — | — | 200 | — | — |
| Stability tests, days<br>Temp., Liq. vol., Atm. | | | | | | | | |
| 55°C, 70%, air | 6 | 3 | 9 | 2 | 9 | 9 | 10 | 9 |
| 55°C, 70%, $N_2$ | 4 | — | 6 | — | 6 | 7 | 6 | 5 |
| 55°C, 94%, air | 4 | — | 6 | — | 6 | 5 | 6 | 6 |
| 55°C, 94%, $N_2$ | 4 | — | 6 | — | — | 5 | 5 | 5 |

## Claims

1. A thermosettable resin composition having improved storage stability comprising a vinyl ester resin, containing the characteristic linkage

$$-\overset{\overset{O}{\|}}{C}-OCH_2\underset{\underset{OH}{|}}{C}HCH_2O-$$

and terminal polymerizable vinylidene groups, a vinyl monomer as a reactive diluent and a stabilizing amount of a phenothiazine containing gelation inhibitor characterized in that the gelation inhibitor is a mixture of oxalic acid and phenothiazine.

2. The composition of Claim 1 characterized in that the oxalic acid is present in an amount from 50 to 1000 parts per million and the phenothiazine is present in an amount from 10 to 500 parts per million based on the total weight of the vinyl ester resin and the vinyl monomer.

3. The composition of Claim 1 characterized in that 4-chloro-2-nitrophenol is added as a gelation inhibitor.

4. The composition of Claim 3 characterized in that the 4-chloro-2-nitrophenol is present in an amount from 10 to 500 parts per million, based on the total weight of the vinyl ester resin and the vinyl monomer.

## Patentansprüche

1. Wärmehärtbare Harzzusammensetzung mit verbesserter Lagerstabilität, enthaltend ein Vinylesterharz, das die charakteristische Verknüpfung

$$-\overset{\overset{O}{\|}}{C}-OCH_2\underset{\underset{OH}{|}}{C}HCH_2O-$$

und am Ende polymerisierbare Polyvinylidengruppen enthält, ein Vinylmonomer als reaktives Verdünnungsmittel und eine stabilisierende Menge eines Phenthiazins enthaltenden Gelierhemmers, dadurch gekennzeichnet, daß der Gelierhemmer eine Mischung aus Oxalsäure und Phenthiazin ist.

2. Zusammensetzung nach Anspruch 1, dadurch gekennzeichnet, daß die Oxalsäure in einer Menge von 50 bis 1000 pro Million und das Phenthiazin in einer Menge von 10 bis 500 Teilen pro Million, bezogen auf Gesamtgewicht des Vinylesterharzes und Vinylmonomer, anwesend ist.

3. Zusammensetzung nach Anspruch 1, dadurch gekennzeichnet, daß 4-Chlor-2-Nitrophenol als ein Gelierhemmer zugesetzt ist.

4. Zusammensetzung nach Anspruch 3, dadurch gekennzeichnet, daß 4-Chlor-2-Nitrophenol anwesend ist in einer Menge von 10 bis 500 Teilen pro Million, bezogen auf Gesamtgewicht des Vinylesterharzes und des Vinylmonomeren.

**Revendications**

1. Composition de résine thermodurcissable ayant une stabilité au stockage améliorée, comprenant une résine d'ester vinylique comportant la liaison caractéristique

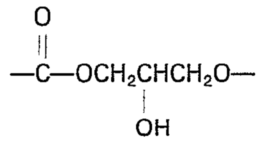

et des groupes vinylidène terminaux polymérisables, un monomère vinylique comme diluant réactif et une quantité stabilisante d'un inhibiteur de gélification contenant de la phénothiazine, caractérisée en ce que l'inhibiteur de gélification est un mélange d'acide oxalique et de phénothiazine.

2. Composition selon la revendication 1, caractérisée en ce que l'acide oxalique est présent en une quantité de 50 à 1000 parties par million et en ce que la phénothiazine est présente en une quantité de 10 à 500 parties par million, par rapport au poids total de la résine d'ester vinylique et du monomère vinylique.

3. Composition selon la revendication 1, caractérisée en ce que l'on ajoute du 4-chloro-2-nitrophénol comme inhibiteur de gélification.

4. Composition selon la revendication 3, caractérisée en ce que le 4-chloro-2-nitrophénol est présent en une quantité de 10 à 500 parties par million, par rapport au poids total de la résine d'ester vinylique et du monomère vinylique.